# EUROPEAN PATENT SPECIFICATION

(11) **EP 3 000 712 B1**
(45) Date of publication and mention of the grant of the patent: **07.06.2017**
(21) Application number: 14791266.1
(22) Date of filing: 23.04.2014
(51) Int. Cl.: B63B 1/38, B63B 3/44

(54) **SHIP WITH BOTTOM AIR CAVITY**
SCHIFF MIT EINEM AM BODEN ANGEORDNETEN LUFTHOHLRAUM
NAVIRE DOTÉ D'UNE CAVERNE AÉRIENNE DANS SON FOND

(30) Priority: 29.04.2013 RU 2013119868
(43) Date of publication of application: 30.03.2016
(73) Proprietor: Ministry Of Industry And Trade Of The Russian Federation, Moscow 109074 (RU)
(72) Inventor: PUSTOSHNYY, Alexander Vladimirovich, St.Petersburg 192288 (RU); SVERCHKOV, Andrey Vladimirovich, St.Petersburg 198255 (RU); GORBACHEV, Yuriy Nikolaevich, St.Petersburg 198188 (RU)
(74) Representative: Jeck, Anton
(86) International application number: PCT/RU2014/000298
(87) International publication number: WO 2014/178757

(56) References cited:
- WO-A1-2005/077746
- RU-C- 1 145 587
- RU-C- 1 824 806
- RU-C2- 2 461 489
- US-A- 3 595 191

## Description

### 1. FIELD OF THE INVENTION

The invention relates to shipbuilding and design of displacement vessels with air cavity on the bottom providing hydrodynamic resistance decrease and improved operational performance.

### 2. DESCRIPTION OF PRIOR ART

The prior art discloses a prototype - the vessel with air layer under the bottom formed by the recess in the bottom enclosed by step in the bow, side keels, an inclined plate in the stern and divided into separate sections by longitudinal keels and transverse baffles extending the full-width of the recess in a streamwise direction alongside the recess, and the pressurized air supply connected to the recess space in the bottom in order to generate and maintain the air layers i.e. artificially cavities, downstream of the transverse baffles (USSR inventor's certificate No. 1145587 dated 30.04.1994 under application No. 3664908/11 dated 29.09.1983). The main component of the structure is the recess in the bottom intended to contain the generated air layer being an integral air cavity with wave-like profile. The longitudinal keels placed inside of the recess divide this air cavity into sections to restrict the transverse movement of the air resulting in improved transverse stability of the vessel. Transverse baffles make it possible to create the air cavity with wavy profiles in the recess when the vessel is running and to prevent its breakup.

However, when the vessel is running in high sea states the integral air cavity is broken up, and if the vessel is running with a significant initial trim it is not possible to create such air cavity at all. It causes flow separations at the vessel's bottom, in the vicinity of the step, and, therefore, the resistance to the vessel motion increases dramatically. Thus the efficiency of the arrangement under consideration in improvement of the vessel's economic performance drops. In such cases the hydrodynamic resistance of the vessel with bottom air cavity is even greater compared to the conventional vessel without the above mentioned recess. The most radical increase in resistance of the vessel with air cavity is caused by failure of the air supply.

Furthermore, when the vessel is running under the above mentioned unfavorable conditions, rigidly fixed transverse baffles do not ensure the formation of an integral air cavity with wavy profile inside of the recess and cannot prevent its breakup.

### 3. SUMMARY OF THE INVENTION

The proposed invention is aimed to improve operational performance and economic efficiency of displacement vessel with bottom air cavity by decreasing the hydrodynamic resistance of the vessel running with a significant initial trim and in high sea states in case of the integral air cavity breakup or failure of the air supply.

For this purpose the displacement vessel with air cavity on bottom having a recess for generation of an integral air cavity with wavy profile beginning from the step in the bow and enclosed by skegs along the sides and a stern arch formed by an inclined plate, the recess space being connected to a pressurized air supply, and with longitudinal keels fitted inside of the recess to restrict the transverse movement of the air, and the transverse baffles in the form of inclined plates being arranged one after the other in a streamline direction, and now, therefore, *according to the invention,* downstream of the step in the bow, forming the recess, the vessel being fitted with the plate that can be pivoted by means of lowering and raising of the leading edge thereof about a spindle oriented across the bottom and connected to the plate, and fastened to the surface of the recess bottom. In this case the streamwise length of the plate is such that as the plate pivots about the spindle it joins the surface of the bottom upstream of the step with the surface of the bottom inside of the recess in order to prevent flow separation downstream of the step; and the plate is capable of limiting its leading edge lowering to the level of the bottom in the vicinity of the step. At the same time the transverse baffles on the bottom of the recess are mounted in such a way that they can be deployed into a working position and stowing back to the bottom by means of pivoting thereof about the spindles being transverse with respect to the vessel's center line and connected to the baffles near their leading edges.

Furthermore, the bottom end in the vicinity of the step has an overhang spanning the recess area downstream of the step where the recess begins, providing a gap-free mating of the bottom surface and the pivoting plate in the vicinity of the step as well as limiting the plate leading edge lowering below the vessel bottom level near the step.

Pivoting plates and baffles are additionally fitted with drive for pivoting thereof.

Fitting of the plate downstream of the step, which forms the recess, in such a way that it can be pivoted by means of lowering or raising the leading edge thereof about the spindle fastened to the surface of the recess bottom, oriented transverse to the bottom and fixed to the plate, ensures smooth flow downstream of the said step due to the smooth transition of the bottom surfaces upstream of the step and inside of the recess, when air cavity in the bottom recess is absent or broken up, and thus enables to prevent flow separation downstream of the step.

Transverse baffles mounted at the recess bottom so that they can be deployed into working position and stowing back to the bottom by means of their pivoting about the spindles, being transverse with respect to the vessel's center line and connected to the baffles near their leading edges, enable generation and maintenance of continuous air layer on the bottom of the vessel in the form of an integral air cavity with wave-like profile preventing its breakup.

### 4. BRIEF DESCRIPTION OF THE DRAWINGS

The essence of the proposed invention is illustrated with drawings, where:
- Fig.1 - displacement vessel with air layer on the bottom (side view);
- Fig.2 - A-A cross-section of Fig.1;
- Fig.3 - transverse baffle folding concept;
- Fig. 4 - pivoting plate operation concept;

### List of numbers and abbreviations used in Figs:

1 - bottom of the vessel;
2 - recess in the vessel bottom for generation of an integral air cavity with wave-like profile;
3 - integral cavity with wave-like profile;
4 - step;
5 - pipeline;
6 - air supply;
7 - longitudinal keel;
8 - transverse baffle;
9 - spindle of pivoting transverse baffle;
10 - pivoting plate;
11 - leading edge of pivoting plate;
12 - spindle of pivoting plate;
13 -inclination angle of pivoting plate;
14 - overhang spanning the area downstream of the step where the recess begins;
OΠ - vessel centerline.

### 5. DESCRIPTION OF THE PREFERRED EMBODIMENT OF THE INVENTION

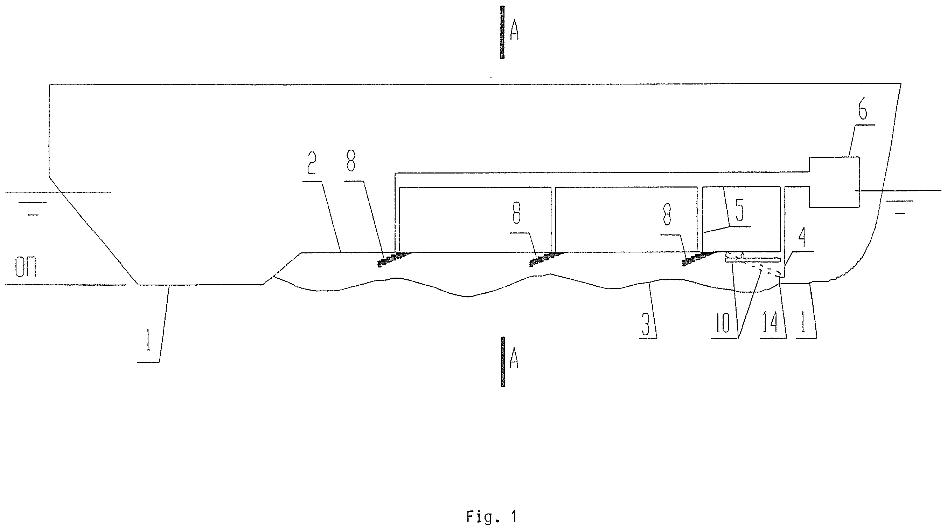

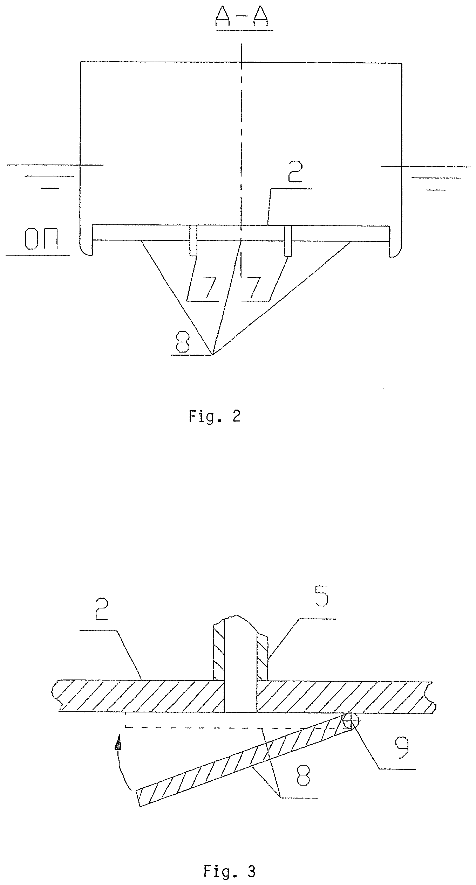

The proposed vessel with air layer on the bottom 1 (Fig.1) has the recess 2 to form the air layer - an integral cavity 3 with wavy profile made in the vessel bottom 1 which begins at the step 4, and air supply 6 connected with the recess 2 space by pipelines 5 used to deliver air to cavities in order to create the air layer under the bottom 1. Inside of the recess 2 there are longitudinal keels 7 placed in parallel with centerline and aimed to restrict the transverse movement of the air on the recess 2 bottom (Fig.2), as well as transverse baffles 8 arranged one after the other in a streamwise direction alongside the recess 2. The above mentioned transverse baffles 8 (Fig.3) are mounted in such a way that they can be deployed into the working position and stowing back to the recess 2 bottom by means of pivoting thereof about the spindles 9 being transverse to the vessel centerline and connected with transverse baffles 8 near their leading edge and located on the recess 2 bottom.

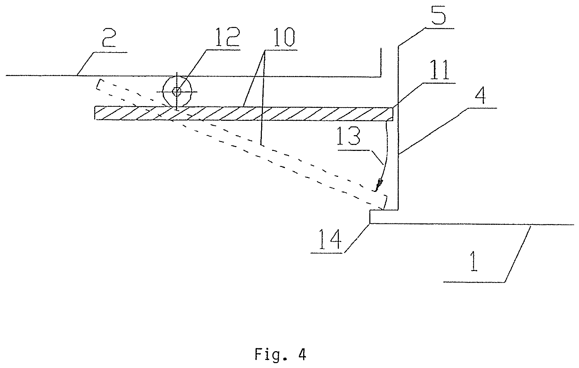

Downstream of the step 4 forming the recess 2 there is a plate 10 (Fig.4) mounted in such a way that it can pivot by means of lowering or raising of leading edge 11 thereof about the spindle 12 fastened to the surface of the recess 2 bottom transverse to the bottom and connected to the plate 10. The streamwise length of the plate 10 is such that the inclination angle 13 of the plate towards the recess 2 bottom when the plate is pivoted ensures joining of the bottom 1 surface upstream of the step 4 with the surface of the bottom inside the recess 2 in order to prevent flow separation downstream of the step 4. In this case the plate 10 is capable of limiting its leading edge 11 lowering to the level of vessel bottom 1 in the vicinity of the step 4.

The bottom 1 end, in the vicinity of the step 4, is made with an overhang 14 spanning the area downstream of the step 4 where the recess begins, providing a gap-free surface mating of the bottom 1 and pivoting plate 10 in the vicinity of the step as well as limiting the plate leading edge 11 lowering below the vessel bottom level.

Pivoting plate 10 and pivoting transverse baffles 8 are fitted with drive for pivoting thereof (the drive is not shown in figures).

### 6. INDUSTRIAL APPLICABILITY

The principles of operation for the proposed arrangement are described below.

When the vessel is running in still water or in low sea states the air from air supply 6 is delivered by air pipelines 5 to the step 4 and transverse baffles 8 in order to create air layer in the form of artificial cavity 3 inside the recess 2. The supplied air is kept in the zone of reduced liquid pressure downstream of the step 4 and transverse baffles 8 resulting in a system of separate, arranged one after the other air cavities formed downstream of the step 4 and each transverse baffle 8. Due to air supply the length of some cavities gradually increases and with time reaches their maximum values equal to the distance between lower edges of transverse baffles 8 at the economic speed of the vessel. When the tail section of the air cavity reaches the lower edges of transverse baffles 8, separate air cavities are merged into an integral air cavity 3 with wavy profile. The optimum merging of individual cavities into an integral air cavity 3 for different operation modes is achieved by supply of appropriate air volume in the recess 2 and by means of appropriate pivoting of the transverse baffles 8 about their spindles 9 located at the recess 2 bottom transverse to the vessel centerline. At this moment the pressure in the integral cavity 3 increases causing the wave profile amplitude to decrease and the cavity 3 surface - air/water interface - to detach from the transverse baffles 8 being no more in contact with water.

When the vessel in running in high sea states with significant pitching or rolling motion, the integrated air cavity 3 breaks up. When the vessel is running with large initial trim the air cavity may not be generated at all. It leads to the increase of friction resistance at the recess 2 bottom surface. Moreover, the flow separation downstream of the step 4 and transverse baffles 8 results in drastic increase of hydrodynamic resistance. Thus, because of air cavity 3 breakup or absence the total resistance to the vessel motion increases dramatically and even exceeds the total resistance of similar vessel without the recess 2 in the bottom; it leads to greater power consumption and, therefore, to the degradation of operating performance of the vessel with the recess 2 for air cavity. In this case in order to prevent flow separation downstream of the step, the flow pattern at the vessel bottom 1 near the step 4 is to be adjusted providing separation-free flow by means of smooth transition of the bottom 1 surface upstream of the step 4 and inside of the recess 2 using the plate 10. For this purpose, while the plate 10 is pivoting about the spindle 12, the leading edge 11 thereof located downstream of the step 4 is lowered to the level of vessel bottom 1 upstream of the step 4 with subsequent restriction of plate pivoting. With the bottom overhang 14 the plate 10 is pivoted about the spindle 12 until its leading edge 11 reaches the inner surface of the bottom overhang 14. As a consequence, the flow in the vicinity of the step 4 becomes separation free. In order to prevent flow separation downstream of the transverse baffles 8 they are folded on the recess 2 bottom by means of pivoting thereof about the spindles 9 that are located on the recess 2 bottom transverse to the vessel centerline and that are connected with transverse baffles near their leading edge 11. As the result the flow downstream of the transverse baffles 8 also becomes separation free. It makes possible to prevent flow separation downstream of the step 4 and transverse baffles 8 and, as a consequence, to reduce hydrodynamic resistance and to improve vessel operating performance and economic efficiency in high sea states or large initial trim.

Pivoting of plate 10 and transverse baffles 8 is effected by pivoting drive.

The proposed vessel with bottom air cavity offers improvement in the operating performance and economic efficiency of such vessels under high sea states or significant initial trim through reduction of hydrodynamic resistance in case of the integral air cavity breakup or air supply failure comparing preferably with the prototype.

## Claims

1. The vessel with bottom air cavity having a recess (2) for generation of an integral air cavity (3) with wavy profile beginning from the step (4) in the bow and enclosed by skegs along the sides and a stern arch formed by an inclined plate, the recess space (2) being connected to a pressurized air supply (6), and with longitudinal keels (7) fitted inside of the recess (2) to restrict the transverse movement of the air, and the transverse baffles (8) in the form of inclined plates being arranged one after the other in a streamline direction ***characterized in that*** downstream of the step (4) in the bow which forms the recess (2), there is a plate (10) mounted so that it can pivot by means of lowering or raising of the leading edge (11) thereof about a spindle (12) fastened to the surface of bottom recess (2) transverse to the bottom and connected to the plate (10); streamwise length of the plate (10) is such that as the plate (10) pivots about the spindle (12) it joins the surface of the bottom upstream of the step (4) with the surface of the bottom inside the recess (2) in order to prevent flow separation downstream of the step (4), the plate being capable of limiting its leading edge (11) lowering to the level of the bottom in the vicinity of the step (4), with the transverse baffles (8) on the bottom of the recess (2) mounted in such a way that they can be deployed into working position and stowing back to the bottom by means of their pivoting about the spindles (9) located at the recess bottom transverse with respect to the vessel's center line and connected to the baffles (8) near their leading edges.

2. The vessel according to claim 1 ***characterized in that*** the bottom end in the vicinity of the step (4) has an overhang (14) spanning the recess area downstream of the step where the recess (2) begins, providing a gap-free mating the bottom surface and the pivoting plate (10) in the vicinity of the step (4) as well as limiting the plate leading edge (11) lowering below the vessel bottom level near the step (4).

3. The vessel according either to claim 1 or 2 ***characterized in that*** the pivoting plate (10) and pivoting transverse baffles (8) have a drive for pivoting thereof.

## Patentansprüche

1. Schiff mit Boden-Luftöffnungen, das folgendes aufweist:
- eine Bodenausnehmung (2) zur Erzeugung einer Integralluft,
- einen Hohlraum (3) mit einem Wellenprofil, das an einem Absatz (4) im Bogen (der Ausnehmung 2) beginnt und durch Skegs (Kielhacken im Heckbereich) längs der Seiten und eines Vordersteven-Bogens, die durch eine Schrägplatte gebildet sind, wobei die Bodenausnehmung (2) mit einem Druckluftbehälter (6) verbunden ist,
- Längskiele (7), die in die Bodenausnehmung eingepasst sind, um die Querbewegung der Luft zu beschränken,
- Querprallkörper (8) in Form von Schrägplatten, die eine nach der anderen in Strömungsrichtung angeordnet sind,
**dadurch gekennzeichnet,**
**dass** in Strömungsrichtung vom Absatz (4) im Bogen, der die Bodenausnehmung (2) bildet, eine Platte (10) derart befestigt ist, dass sie sich drehen kann und dabei die Führungskante (11) um eine Spindel (12) absenkt oder anhebt, die an der Oberfläche der Bodenausnehmung (2) in Querrichtung des Bodens und an der Platte (10) befestigt ist,
**dass** die Länge der Platte (10) in Strömungsrichtung derart bemessen ist, dass bei der Drehung der Platte (10) um die Spindel (12) die Oberfläche des Bodens in Strömungsrichtung des Absatzes (4) mit der Oberfläche des Bodens innerhalb der Bodenausnehmung (2) verbunden wird, um eine Flusstrennung in Strömungsrichtung zum Absatz (4) zu verhindern,
**dass** die Platte (10) ihre Führungskante auf die Höhe des Bodens in die Nähe des Absatzes (4) absenkt und
**dass** die Querprallkörper (8) an der Bodenausnehmung (2) derart befestigt sind, dass sie in die Arbeitsposition und zurück zum Boden mittels ihrer Drehung um die Spindeln (9) gebracht werden können, die an der Bodenausnehmung quer zur Schiffsmittellinie und an den Prallkörpern (8) in die Nähe ihrer Führungskanten angeordnet sind.

2. Schiff nach Anspruch 1,
**dadurch gekennzeichnet,**
**dass** das Bodenende in der Nähe des Absatzes (4) einen Überhang (14) aufweist, der einen Ausnehmungsbereich in Strömungsrichtung überspannt, in dem die Bodenausnehmung (2) beginnt,
**dass** der Überhang (14) eine lückenlose Anpassung der Bodenoberfläche an die sich drehende Fläche (10) in der Nähe des Absatzes (4) bewirkt und dass der Überhang (14) auch eine Begrenzung der Absenkung der Plattenführungskante (11) unter den Schiffsboden in der Nähe des Absatzes (4) vornimmt.

3. Schiff nach einem der Ansprüche 1 oder 2,
**dadurch gekennzeichnet,**
**dass** die sich drehende Platte (10) sich drehenden Querprallkörper (8) einen Antrieb für die Drehung aufweist.

## Revendications

1. Le vaisseau avec cavité d'air en carène possède un renfoncement (2) qui procure une cavité d'air intégrale (3) avec profil ondulé à partir du redan (4) dans l'étrave, fermée par des crosses le long des flancs et un arc de poupe formé d'une plaque inclinée, cet espace du renfoncement (2) étant relié à une réserve d'air sous pression (6), avec quilles longitudinales (7) ménagées à l'intérieur du renfoncement (2) pour restreindre le mouvement transversal de l'air et chicanes transversales (8) sous forme de plaques inclinées disposées successivement dans une direction profilée, le tout *caractérisé comme suit.* En aval du redan (4) dans l'étrave où il y a renfoncement (2) se trouve une plaque (10) montée de manière à pivoter, par abaissement ou élévation de son bord d'attaque (11), sur un axe de rotation (12) fixé à la surface du renfoncement de la carène (2), transversalement à celle-ci et relié à la plaque (10); la longueur longitudinale de la plaque (10) est telle qu'à mesure que celle-ci (10) pivote sur l'axe de rotation (12), elle joint la surface de la carène en amont du redan (4) et la surface de la carène à l'intérieur du renfoncement (2), afin d'empêcher la séparation par l'écoulement en aval du redan (4), cette plaque (10) pouvant limiter l'abaissement de son bord d'attaque (11) au niveau de la carène à proximité du redan (4), les chicanes transversales (8) sur la carène au renfoncement (2) étant montées de manière à pouvoir être déployées en position de travail et arrimées à la carène, par pivotement sur les axes de rotation (9) situés au renfoncement de celle-ci transversalement à la ligne de quille du vaisseau et reliés aux chicanes (8) près de leurs bords d'attaque.

2. Le vaisseau, conformément à la revendication 1, est *caractérisé comme suit.* L'extrémité de la carène dans la région du redan (4) comporte un surplomb (14) couvrant toute la longueur de la région du renfoncement, en aval du redan où commence le renfoncement (2), procurant ainsi une zone sans interstices qui épouse la surface de la carène et la plaque pivotante (10) à proximité du redan (4), et limitant le bord d'attaque de la plaque (11) s'abaissant sous le niveau de la carène du vaisseau près du redan (4).

3. Le vaisseau, conformément à la revendication 1 ou 2, est *caractérisé comme suit.* La plaque pivotante (10) et les chicanes transversales pivotantes (8) comportent un moteur d'entraînement pour le pivotement de celles-ci.
